# EUROPÄISCHE PATENTSCHRIFT

(11) **EP 2 481 935 B1**
(45) Veröffentlichungstag und Bekanntmachung des Hinweises auf die Patenterteilung: **03.08.2016**
(21) Anmeldenummer: 12000206.8
(22) Anmeldetag: 13.01.2012
(51) Int. Cl.: F16B 1/00, F16B 19/10, F16B 5/06, B60R 21/217, B60R 13/02, F16B 5/12, F16B 21/06, F16B 21/07, F16B 21/08

(54) **Verfahren zum Montieren eines Bauteils und Befestigungsclip**
Method for fitting a component and fixing clip
Procédé de montage d'un composant et clip de fixation

(30) Priorität: 28.01.2011 DE 102011009683
(43) Veröffentlichungstag der Anmeldung: 01.08.2012
(73) Patentinhaber: TRW Automotive Electronics & Components GmbH, 78315 Radolfzell (DE)
(72) Erfinder: Demerath, Michael, 66909 Hueffler (DE); Fischer, Anton, 73579 Schechingen Leinweiler (DE)
(74) Vertreter: Prinz & Partner mbB

(56) Entgegenhaltungen:
- WO-A1-01/27906
- DE-U1-202005 018 240
- GB-A- 2 239 723
- GB-A- 2 364 092
- JP-A- 2010 077 989
- US-A1- 2002 146 282
- US-A1- 2005 285 377
- US-A1- 2007 145 140
- US-A1- 2009 044 385
- US-B1- 7 677 598

## Beschreibung

Die Erfindung betrifft ein Verfahren zum Montieren eines Bauteils mittels eines Befestigungsclips sowie einen Befestigungsclip.

Befestigungsclips werden eingesetzt, um an einer Fahrzeugkarosserie Anbauteile schnell und sicher zu fixieren. Der Befestigungsclip weist beispielsweise einen Rastabschnitt auf, der in eine Fahrzeugöffnung eingeschoben wird und in dieser verrastet, und ein Kopfelement, das in den Rastabschnitt eingeschoben wird. Das zu befestigende Bauteil (z.B. ein Verkleidungsteil oder ein Gassack-Modul) ist entweder direkt mittels des Rastabschnittes fixiert, beispielsweise wenn dieser als Befestigungsklammer ausgeführt ist, oder an einem Körper, der am Rastabschnitt vorgesehen ist, beispielsweise wenn dieser als Dübel ausgeführt ist. Das zu befestigende Bauteil kann auch am Kopfelement befestigt sein.

Bei einem zweiteilig ausgeführten Befestigungsclip sind der Rastabschnitt und das Kopfelement mit komplementären Rastelementen versehen, die durch eine Einschubbewegung miteinander in Eingriff gebracht werden. In der eingeschobenen Endmontageposition verhindert das Kopfelement auch, dass der Rastabschnitt aus der Öffnung der Fahrzeugkarosserie wieder herausgezogen werden kann.

Es ist bekannt, den Rastabschnitt und das Kopfelement zur einfacheren Verarbeitung aneinander in einer Vormontageposition vorzufixieren, sodass der Befestigungsclip als ein einziges Bauteil gehandhabt werden kann. In der Vormontageposition kann der Rastabschnitt in die Öffnung an der Fahrzeugkarosserie eingesetzt werden, und das zu befestigende Bauteil kann am Befestigungsclip fixiert werden. Zur endgültigen Fixierung des Befestigungsclips an der Fahrzeugkarosserie wird dann das Kopfelement aus seiner Vormontageposition in die Endmontageposition gebracht.

Bei einem einteilig ausgeführten Befestigungsclip sind Rastabschnitt und Kopfelement einstückig miteinander verbunden. Das Kopfelement wird in Einschubrichtung belastet, um den Rastabschnitt in der Öffnung zu verrasten.

Die Vormontageposition entspricht in diesem Fall einer Position, in der der Rastabschnitt noch nicht oder noch nicht vollständig in die Öffnung eingeschoben ist.

Derartige Befestigungsclips werden in größerer Anzahl und oft an schwer einsehbaren Stellen im Fahrzeug verbaut. Ein Beleg dafür, dass sämtliche Befestigungsclips korrekt in der Endmontageposition verriegelt wurden, ist wünschenswert, aber aufwendig.

In der WO 01/27906 A1 ist ein mit einem Barcode versehener Anhänger mit einem Rastelement zum Verschließen von Vorratsbehältern gezeigt. Der den Barcode tragende Abschnitt kann um ein Filmscharnier verschwenkt werden, um den Code besser ablesen zu können. Ein Verschlussabschnitt kann vom Anhänger abgetrennt werden, und in das Rastelement eingeschoben werden, sodass die Verrastung nur durch Zerstören des Anhängers zu lösen ist.

Die DE 20 2005 018 240 U1 zeigt einen Rastverbinder, der mit einem Halteclip zusammenwirkt, wobei der Rastverbinder zunächst nur bis in eine Vorfixierungsposition in den Halteclip eingeschoben wird. Bei der endgültigen Montage wird der Rastverbinder weiter in den Halteclip hineingedrückt, wobei zwei am Halteclip angeordnete Haken über einen Endabschnitt des Rastverbinders schnappen, die zuvor durch den Rastverbinder verdeckt waren. Die Sichtbarkeit dieser Haken wird mittels eines Bildverarbeitungssystems überprüft und zur Dokumentation einer korrekten Rastverbindung herangezogen.

Aufgabe der Erfindung ist es, eine Dokumentation der korrekten Befestigung eines Befestigungsclips auf einfache Weise zu ermöglichen.

Erfindungsgemäß wird dies mit den Merkmalen des Anspruchs 1 erreicht . Nur wenn der Befestigungsclip in seiner Endmontageposition ist, kann der maschinenlesbare Code von einem Lesegerät korrekt gelesen werden. In der Vormontageposition hingegen verhindert das Freigabeelement, dass der Code abgelesen, also korrekt erkannt werden kann. Da jedes Ablesen, hier gleichgesetzt mit Erkennen, eines Codes bedeutet, dass der Befestigungsclip korrekt montiert wurde, lässt sich über den abgelesenen Code auch dokumentieren, dass der Befestigungsclip korrekt verbaut wurde. Das Verfahren stellt demnach eine einfache Kontrollmöglichkeit für die Montage des Befestigungsclips sowie eine einfache Dokumentationsmöglichkeit für die verbauten Befestigungsclips dar.

Zum Ablesen des Codes wird ein für die jeweilige Codeart spezifisches Lesegerät verwendet. Natürlich ist die Möglichkeit, den Code abzulesen, von einer spezifischen Leseposition in Relation zum Befestigungsclip abhängig. Erfindungsgemäß ist jedoch der Befestigungsclip so ausgebildet, dass die Leseposition bezüglich eines spezifischen Befestigungsclips fest vorgegeben ist, also das Lesegerät nicht relativ zum Befestigungsclip bewegt, sondern in einer festen Position gegenüber dem Befestigungsclip gehalten wird. Bezüglich einer derartigen vorbestimmten Leseposition kann der Code nur abgelesen werden, wenn das Kopfelement in der Endmontageposition ist.

Es ist auch möglich, das Freigabeelement so auszubilden, dass der Code erst in der zweiten Stellung vollständig ist. Dann ist die Leseposition insofern variabel, dass der Code in jeder Position abgelesen werden kann, in der er im Sichtbereich des Lesegeräts liegt.

Vorzugsweise wird dokumentiert, ob der Code gelesen werden konnte, oder ob eine Fehlermeldung ausgegeben wurde.

Das Verfahren wird vorzugsweise für sämtliche in einem Arbeitsschritt zu verbauende Befestigungsclips durchgeführt, wobei für jeden Befestigungsclip erfasst und festgehalten wird, ob ein Code gelesen werden konnte.

Wenn der Code nicht gelesen werden konnte, kann eine Warnung ausgegeben werden, sodass der Montagefehler sofort behoben werden kann.

Die Erfindung betrifft auch einen Befestigungsclip mit den Merkmalen des Anspruchs 4, der insbesondere in einem gerade beschriebenen Verfahren verwendet werden kann. Die Ablesbarkeit (Erfassbarkeit) des Codes hängt also von der Montageposition des Befestigungsclips ab. Die mechanische Bewegung des Freigabeteils, die beispielsweise durch die Relativbewegung von Kopfelement und Rastabschnitt oder durch eine Relativbewegung des Befestigungsclips gegen ein fahrzeugfestes Bauteil bewirkt wird, führt dazu, dass der Code freigegeben wird und durch ein Lesegerät von einer vorbestimmten Ableseposition aus abgelesen und erkannt werden kann.

Unter einem Code wird hier eine vollständige Abfolge von codierenden Zeichen verstanden, die den gesamten Sinngehalt der codierten Information enthält.

Als Code wird ein Barcode verwendet. Barcodes bestehen aus einer Abfolge von parallelen Strichen und Lücken unterschiedlicher Breite. Diese Art Code kann leicht und günstig auf diverse Oberflächen aufgebracht werden und beliebige Informationen codieren. Barcodelesegeräte gibt es in vielfältiger Ausbildung, sie sind zuverlässig und günstig.

Der Code kann beispielsweise aufgedruckt, aufgeklebt oder eingeprägt sein, direkt auf einem oder mehreren der gegeneinander beweglichen Bestandteile des Befestigungsclips oder auf einem damit verbundenen Bauteil.

Es gibt vielfältige Möglichkeiten, wie eine Freigabe des maschinenlesbaren Codes unter Verwendung eines Freigabeelements erfolgen kann. Im Nachfolgenden werden beispielhaft einige Ausführungsformen der Erfindung näher beschrieben.

In einer möglichen Umsetzung der Erfindung ist zumindest ein Abschnitt des Codes auf dem Freigabeelement selbst angebracht.

Das Freigabeelement ändert vorteilhaft seine räumliche Lage und/oder seine Ausrichtung gegenüber dem Rastabschnitt bzw. dem Kopfelement, wenn das Kopfelement in die Endmontageposition bewegt wird.

Beispielsweise kann das Freigabeelement eine Platte sein, die beweglich mit dem Kopfelement verbunden ist.

Dabei ist es möglich, den gesamten Code auf dem Freigabeelement anzubringen und dieses gegenüber der vorbestimmten Leseposition und der vorbestimmten Ableserichtung zunächst so abzuwinkeln, dass in der ersten Stellung der Code nicht abgelesen werden kann, beispielsweise, weil bei einem Barcode durch den steilen Winkel das Lesegerät den Code nicht auflösen kann. Beim Versuch, den Code abzulesen, wird eine Fehlermeldung ausgegeben. Durch die Bewegung des Kopfelements in die Endmontageposition wird der Winkel, den das Freigabeelement mit dem Code gegenüber dem Lesegerät in der vorbestimmten Leseposition einnimmt, so verändert, dass der Code in der zweiten Stellung des Freigabeelements erfasst und abgelesen werden kann.

In einer möglichen Ausführungsform der Erfindung erstreckt sich das Freigabeelement in der ersten Stellung in einem spitzen Winkel zu einer Längsachse des Kopfelements, und bei einer Bewegung entlang der Längsachse zum Verbringen des Kopfelements aus der Vormontageposition in die Endmontageposition wird der Winkel zwischen dem Freigabeelement und der Längsachse vergrößert.

Die Bewegung des Freigabeelements kann jeweils dadurch bewirkt werden, dass dieses in Anlage an ein Teil des Befestigungsclips oder ein fahrzeugfestes Bauteil kommt.

Es ist auch möglich, nur einen Abschnitt des Codes auf dem Freigabeelement anzuordnen und ein separates Codegrundelement vorzusehen, auf dem wenigstens ein zweiter Abschnitt des Codes angebracht ist. Dabei wird bei der Bewegung des Kopfelements gegenüber dem Rastabschnitt das Freigabeelement relativ zum Codegrundelement bewegt. Die Codeabschnitte auf dem Freigabeelement und auf dem Codegrundelement ergänzen sich dabei zum gesamten Code.

Das Freigabeelement kann sich dabei beispielsweise in der ersten Stellung in einem Winkel zum Codegrundelement erstrecken, wohingegen in der zweiten Stellung das Freigabeelement und das Codegrundelement vorzugsweise in einer Ebene liegen. Beim Ablesen in der Vormontageposition wird aufgrund des Winkels zwischen den beiden Codeabschnitten ein Teil des Codes gar nicht oder mit geringeren Abständen zwischen den einzelnen Barcodestrichen erfasst. Das Lesegerät ist dabei vorteilhaft so eingestellt, dass es diese Abweichung erkennt und den Code als nicht lesbar verwirft. Nur wenn ein bestimmter Winkel zwischen den beiden Codeabschnitten unterschritten wird und vorzugsweise beide Codeabschnitte in einer Ebene liegen, wird der Code erkannt.

Es können auch zwei Freigabeelemente vorgesehen sein, die gegeneinander oder gegen ein Codegrundelement bewegt werden. Dabei kann ein zweiteiliger oder auch dreiteiliger Code realisiert sein. Auch die Verwendung von einer höheren Anzahl von Freigabeelementen wäre denkbar.

Eine andere Umsetzung des erfinderischen Gedankens führt zu Ausführungsformen, in denen das Freigabeelement eine Maskierungsplatte ist, die in der ersten Stellung einen Abschnitt des Codes abdeckt. In diesem Fall kann der Code in der ersten Stellung nicht vollständig gelesen werden, sondern erst, wenn die Maskierungsplatte in der zweiten Stellung so bewegt wurde, dass der gesamte Code gegenüber dem Lesegerät freiliegt.

Beispielsweise kann die Maskierungsplatte ein Fenster aufweisen, das dem Lesegerät nur den Blick auf den gesamten Code gibt, wenn das Kopfelement in der Endmontageposition und damit das Freigabeelement in der zweiten Stellung ist.

In einer anderen Ausführungsform ist die Maskierungsplatte so mit dem Kopfelement gekoppelt, dass sie in der zweiten Stellung vom Code entfernt ist. Hier wird beispielsweise die Maskierungsplatte durch die Bewegung des Kopfelements vom Codegrundelement weggezogen, sodass dieses in der zweiten Stellung gegenüber dem Lesegerät freiliegt.

Die Maskierungsplatte kann dabei beispielsweise in einen Zwischenraum zwischen dem Rastabschnitt und dem Kopfelement gezogen werden. Es ist auch möglich, dass die Maskierungsplatte bei der Bewegung des Kopfelements abbricht.

Möglich ist es, mehrere Maskierungsplatten beispielsweise in der Form von schmalen Stegen vorzusehen, die jeweils einen Abschnitt des Codes abdecken.

Der Code kann so ausgebildet sein, dass er eine eindeutige Identifizierung des Befestigungselements ermöglicht. Es können beispielsweise bestimmte Codes für die Befestigung bestimmter Bauteile, beispielsweise eines Seitenairbags an einem Dachrahmen, verwendet werden.

Das Verbringen des Kopfelements von der Vormontageposition in die Endmontageposition kann durch eine lineare Bewegung in Richtung der Längsachse des Kopfelements erfolgen. Es ist jedoch auch denkbar, dass das Verbringen in die Endmontageposition durch eine Rotation erfolgt. In diesem Fall können beispielsweise die einzelnen Codeabschnitte zunächst in einer Ebene in einem Winkel zueinander angeordnet sein und in der zweiten Stellung linear ausgerichtet sein, sodass der Code ablesbar ist.

Die Erfindung wird im Folgenden anhand mehrerer Ausführungsbeispiele mit Bezug auf die beigefügten Zeichnungen näher beschrieben. In den Zeichnungen zeigen:
- Figur 1 einen erfindungsgemäßen Befestigungsclip zur Verwendung in einem erfindungsgemäßen Verfahren gemäß einer ersten Ausführungsform in einer schematischen perspektivischen Ansicht, mit dem Kopfelement in einer Vormontageposition;
- Figur 2 den Befestigungsclip aus Figur 1 in einer Draufsicht;
- Figur 3 den Befestigungsclip aus Figur 1, wobei sich das Kopfelement in einer Endmontageposition befindet;
- Figur 4 den Befestigungsclip aus Figur 3 in einer Draufsicht;
- Figur 5 eine schematisch perspektivische Darstellung eines erfindungsgemäßen Befestigungsclips zur Verwendung in einem erfindungsgemäßen Verfahren gemäß einer zweiten Ausführungsform, mit dem Kopfelement in der Vormontageposition;
- Figur 6 den Befestigungsclip aus Figur 5 in einer Draufsicht;
- Figur 7 den Befestigungsclip aus Figur 5, wobei sich das Kopfelement in der Endmontageposition befindet;
- Figur 8 den Befestigungsclip aus Figur 7 in einer Draufsicht;
- Figur 9 eine schematisch perspektivische Darstellung eines erfindungsgemäßen Befestigungsclips zur Verwendung in einem erfindungsgemäßen Verfahren gemäß einer dritten Ausführungsform, mit dem Kopfelement in der Vormontageposition;
- Figur 10 den Befestigungsclip aus Figur 9 in einer Draufsicht;
- Figur 11 den Befestigungsclip aus Figur 9, wobei sich das Kopfelement in der Endmontageposition befindet;
- Figur 12 den Befestigungsclip aus Figur 11 in einer Draufsicht;
- Figur 13 eine schematisch perspektivische Darstellung eines erfindungsgemäßen Befestigungsclips zur Verwendung in einem erfindungsgemäßen Verfahren gemäß einer vierten Ausführungsform, mit dem Kopfelement in der Vormontageposition;
- Figur 14 den Befestigungsclip aus Figur 13 in einer Draufsicht;
- Figur 15 den Befestigungsclip aus Figur, wobei sich das Kopfelement in der Endmontageposition befindet;
- Figur 16 den Befestigungsclip aus Figur 15 in einer Draufsicht; und
- Figur 17 eine schematisch perspektivische Darstellung eines nicht erfindungsgemäßen Befestigungsclips.

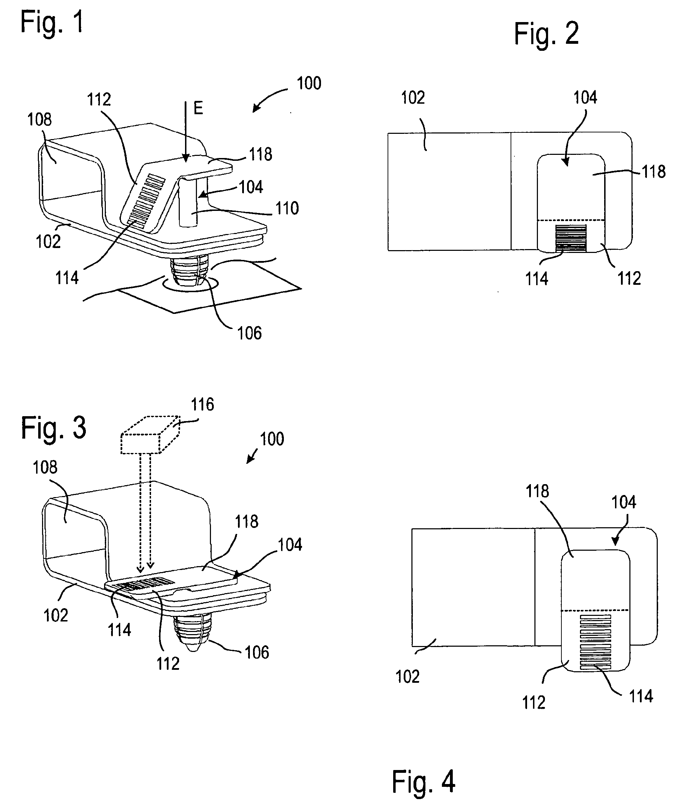

Figur 1 zeigt einen Befestigungsclip 100, der dazu dient, ein Bauteil an einer Fahrzeugkarosserie zu befestigen. Der Befestigungsclip 100 ist zweiteilig aufgebaut und weist ein Halteteil 102 sowie ein Kopfelement 104 auf. Das Halteteil 102 besitzt einen Rastabschnitt 106, der in eine in Figur 1 angedeutete Öffnung in der Fahrzeugkarosserie eingeschoben und dort verrastet werden kann, also so befestigt werden kann, dass er dort bei den üblicherweise wirkenden Kräften fest verankert ist. Außerdem ist am Halteteil 102 eine Aufnahme 108 ausgebildet, die hier so geformt ist, dass ein Seitengassackpaket hindurch geschoben und so mit dem Befestigungsclip 100 verbunden werden kann.

Das Halteteil 102, insbesondere die Aufnahme 108, könnte aber auch zur Fixierung eines beliebigen anderen Bauteils ausgelegt sein.

Das Kopfelement 104 und das Halteteil 102 (und damit der Rastabschnitt 106) sind in einer Einschubrichtung E gegeneinander beweglich. Vor der Befestigung des Befestigungsclips 100 am Fahrzeug befindet sich das Kopfelement 104 in einer Vormontagestellung (Figur 1), in der das Kopfelement 104 und das Halteteil 102 miteinander verbunden sind, aber der Rastabschnitt 106 des Halteteils 102 noch in eine Öffnung eingeschoben werden kann.

Nachdem das Halteteil 102 mit seinem Rastabschnitt 106 in die Öffnung eingeschoben wurde, wird zur Endmontage das Kopfelement 104 aus der Vormontageposition in die Endmontageposition verschoben. Das Kopfelement 104 weist einen Spreizabschnitt 110 auf, der mit dem Rastabschnitt 106 des Halteteils 102 zusammenwirkt, so dass beispielsweise die Rastelemente am Rastabschnitt 106, die das Halteteil 102 am Rand der Öffnung fixieren, auseinandergespreizt oder am Zusammendrücken gehindert werden. In diesem Zustand kann der Befestigungsclip 100 nicht aus der Öffnung entfernt werden.

Derartige Befestigungsclips sind in vielfältiger Form bekannt und werden vielseitig eingesetzt. Für die vorliegende Erfindung ist es unwesentlich, um welche Art von Befestigungsclip es sich handelt. Es kommt lediglich darauf an, dass die beiden Teile des Befestigungsclips zunächst in einer Vormontageposition und erst bei der endgültigen Befestigung am Fahrzeug in einer Endmontageposition sind, wobei das Kopfelement 104 relativ zum Halteteil 102 bzw. dem Rastabschnitt 106 eine andere Position einnimmt. Die Einschubrichtung E kann, wie bei den hier gezeigten Beispielen, linear in Richtung der Längsachse des Kopfelements 104 liegen.

Es ist aber auch möglich, als Einschubrichtung eine Rotationsbewegung vorzusehen, mit der das Kopfelement aus der ersten in die zweite Stellung gebracht wird, um den Befestigungsclip von der Vormontageposition in die Endmontageposition zu überführen.

Die Figuren 1 und 2 zeigen den Befestigungsclip 100 mit dem Kopfelement 104 in der Vormontageposition, die Figuren 3 und 4 den Befestigungsclip 100 mit dem Kopfelement 104 in der Endmontageposition.

Zur Montage eines Bauteils an der Fahrzeugkarosserie werden beispielsweise mehrere Befestigungsclips zunächst am zu befestigenden Bauteil fixiert. Dann werden die Befestigungsclips in Öffnungen der Fahrzeugkarosserie eingeschoben. Als letzter Schritt werden die Befestigungsclips an der Fahrzeugkarosserie fixiert, indem die Kopfelemente der Befestigungsclips aus der Vormontageposition in die Endmontageposition gebracht werden. Erst jetzt ist das zu befestigende Bauteil sicher an der Fahrzeugkarosserie befestigt.

Um dokumentieren zu können, dass jeder der Befestigungsclips 100 korrekt verriegelt ist und jedes Kopfelement 104 korrekt in die Endmontageposition gebracht wurde, ist am Befestigungsclip 100 ein Freigabeelement 112 vorgesehen, das mit dem Kopfelement 104 gekoppelt ist. Bei einer Bewegung des Kopfelements 104 relativ zum Halteteil 102 in Einschubrichtung E bewegt sich das Freigabeelement 112 aus einer ersten Stellung, die es innehat, wenn das Kopfelement 104 in der Vormontageposition ist, in eine zweite Stellung, die es annimmt, wenn das Kopfelement 104 in der Endmontageposition ist.

Am Befestigungsclip 100 ist ein maschinenlesbarer Code 114 angeordnet, der von einem Lesegerät 116 aus einer vorbestimmten Leseposition (angedeutet in Figur 3) erfasst und abgelesen werden kann. Die Ableserichtung ist in den hier gezeigten Ausführungsformen parallel zur Einschubrichtung E.

Der Code 114 ist hier jeweils ein Barcode, der in diesem Fall auf das Freigabeelement 112 aufgeklebt, aufgedruckt oder in dieses eingeprägt ist.

Das Freigabeelement 112 sorgt dafür, dass der Code 114 nicht abgelesen werden kann, wenn das Freigabeelement 112 in der ersten Stellung ist, sondern nur, wenn das Kopfelement 104 in der Endmontageposition ist und sich das Freigabeelement 112 in der zweiten Stellung befindet.

Nachdem ein Befestigungsclip 100 vollständig am Fahrzeug montiert ist, wird mittels des in seine vorbestimmte Leseposition gebrachten Lesegeräts 116 versucht, den Code 114 abzulesen. Bei erfolgreichem Ablesevorgang wird dieser im Lesegerät 116 oder einer damit verbundenen (nicht dargestellten) Elektronik vermerkt und dokumentiert. Kann der Code 114 hingegen nicht abgelesen werden, zeigt das Lesegerät 116 eine Warnung an und dokumentiert dies ebenfalls. Dann ist es möglich, den Befestigungsclip 100 zu überprüfen und gegebenenfalls das Kopfelement 104 korrekt in die Endmontageposition zu bringen. Ein erneuter Ableseversuch wird dann zeigen, dass der Code 114 abgelesen werden kann, und die korrekt erfolgte Befestigung des Befestigungsclips 100 ist dokumentiert.

Im Folgenden werden mehrere Ausführungsformen von Befestigungsclips beschrieben, bei denen dieses Prinzip anhand von unterschiedlichen Arten von Freigabeelementen beispielhaft erläutert wird.

Die in den Figuren 1 bis 4 dargestellte erste Ausführungsform verwendet ein Freigabeelement 112, das bei der Bewegung von der ersten in die zweite Stellung seine Ausrichtung, in diesem Fall seinen Winkel gegenüber der Längsachse des Kopfelements 104, verändert.

In der ersten Stellung erstreckt sich das Freigabeelement 112, das hier die Form einer länglichen Platte hat und über ein Filmscharnier an einem Eindrückabschnitt 118 des Kopfelements 104 schwenkbar angelenkt ist, in einem spitzen Winkel zur Einschubrichtung E. Aus der vorbestimmten Leseposition des Lesegeräts 116 stellt sich der Code 114 in der in Figur 2 dargestellten Form dar.

In diesem Fall erkennt das Lesegerät 116, dass die Abstände der einzelnen Striche des Barcodes einen vorgegebenen Mindestabstand unterschreiten, sodass der Code nicht aufgelöst werden kann. Beim Versuch, den Code 114 an dem Befestigungsclip 100 in der in Figur 1 und 2 gezeigten Stellung abzulesen, in der das Freigabeelement 112 in der ersten Stellung ist, gibt das Lesegerät 116 eine Fehlermeldung aus.

Durch das Herunterdrücken des Eindrückabschnitts 118 des Kopfelements 104 in Einschubrichtung E wird aufgrund des Kontakts mit dem Körper des Halteteils 102 das Freigabeelement 112 verschwenkt, sodass sich der Winkel gegenüber der Einschubrichtung E vergrößert. Im hier dargestellten Beispiel liegt bei vollständig eingeschobenem Kopfelement 104 (korrekte Endmontageposition) das Freigabeelement 112 in einer Ebene mit dem Eindrückabschnitt 118. Wird jetzt mittels des Lesegeräts 116 versucht, den Code 114 abzulesen, so ist dies erfolgreich, und der abgelesene Code sowie die Bestätigung des erfolgreichen Ablesevorgangs werden im Lesegerät 116 gespeichert.

Bei diesem Beispiel ist der Code 114 vollständig auf dem Freigabeelement 112 angebracht.

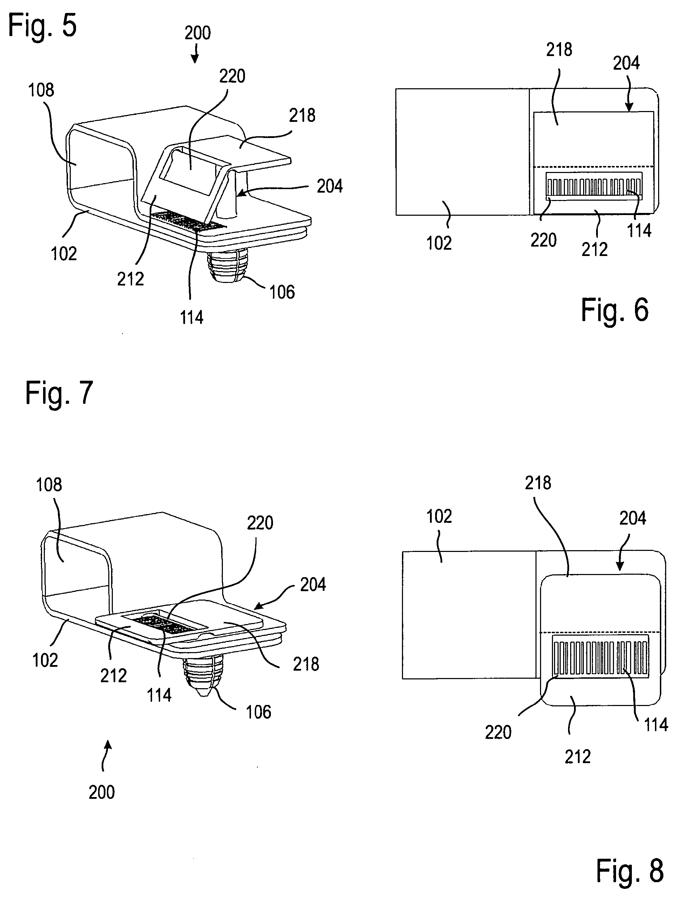

In den Figuren 5 bis 8 ist eine zweite Ausführungsform eines Befestigungsclips 200 dargestellt. Das Halteteil 102 ist im Wesentlichen identisch aufgebaut wie das Halteteil der ersten Ausführungsform, sodass hier die bereits eingeführten Bezugszeichen beibehalten werden.

Die Figuren 5 und 6 zeigen den Befestigungsclip 200 in der Vormontageposition des Kopfelements 204, während die Figuren 7 und 8 den Befestigungsclip 200 mit dem Kopfelement 204 in der Endmontageposition darstellen.

Im Unterschied zur ersten Ausführungsform ist das plattenförmige Freigabeelement 212 in Form einer Maskierungsplatte ausgebildet, die ein Fenster 220 aufweist.

Der Code 114 ist in diesem Fall auf einem ebenen Abschnitt des Halteteils 102 aufgebracht, wobei der Code 114 und das Fenster 220 im Freigabeelement 212 so zueinander ausgerichtet sind, dass beim Versuch des Ablesens durch das Lesegerät 116 (nur in der ersten Ausführungsform dargestellt), welches sich an derselben vorbestimmten Leseposition wie in der ersten Ausführungsform befindet, nur einen Teil des Codes 114 erkennen kann, der nicht für ein erfolgreiches Ablesen des Codes 114 ausreicht. Das Lesegerät 116 wird in diesem Fall (Figuren 5 und 6), in dem das Freigabeelement 212 sich in der ersten Stellung befindet, eine Fehlermeldung ausgeben.

Erst wenn das Kopfelement 204 seine korrekte Endmontageposition eingenommen hat und damit das Freigabeelement 212 in der zweiten Stellung ist, liegt das Fenster 220 so über dem Code 114, dass dieser vom Lesegerät 116 vollständig erfassbar ist.

Es wären natürlich auch Variationen denkbar, bei denen ein erster Abschnitt des Codes 114 auf dem Halteteil 102 und ein zweiter Abschnitt des Codes auf dem Freigabeelement 212 angebracht ist. Die beiden Abschnitte des Codes 114 ergänzen sich dann in der zweiten Stellung des Freigabeelements zum vollständigen Code 114 und können nur in dieser vom Lesegerät 116 abgelesen werden. In diesen und ähnlichen Fällen kann der Code 114 abgelesen werden, wenn das Lesegerät 116 in einer Stellung ist, in der es den Code 114 erfassen kann. Die vorbestimmte Leseposition ist daher in einem gewissen Rahmen variabel.

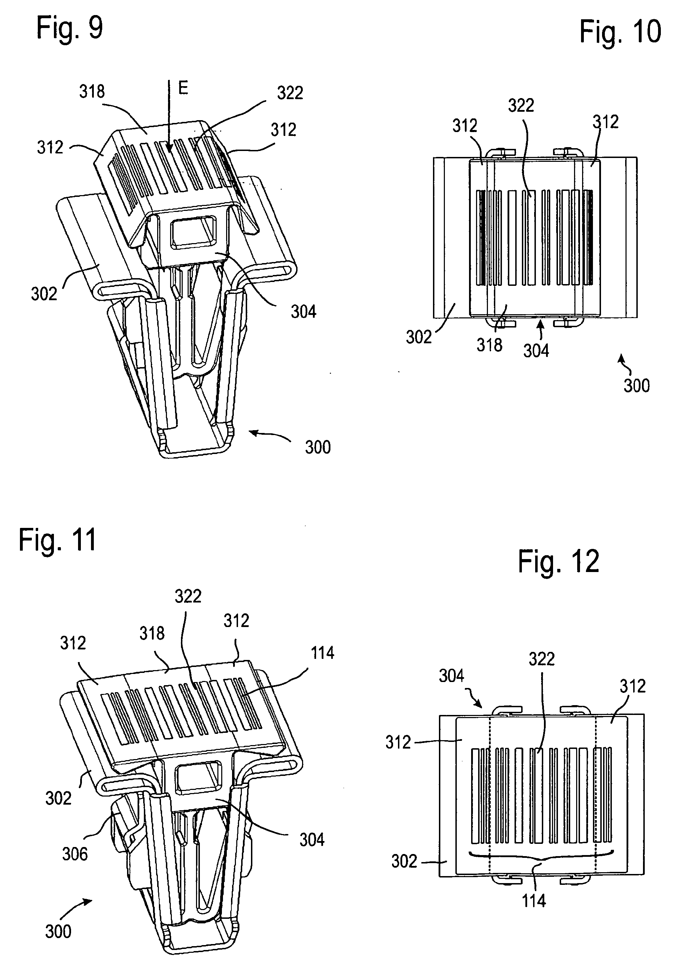

In den Figuren 9 bis 12 ist eine dritte Ausführungsform eines Befestigungsclips 300 gezeigt.

Das Halteteil 302 ist als allgemein V-förmige Rastklammer ausgeführt, wobei die Rastabschnitte 306 als Absätze auf den Außenflächen der Rastklammer ausgeführt sind. Das Kopfelement 304 mit als Einschubteil ausgeführt, das in die Rastklammer eingeschoben werden kann. Auch in diesem Fall wird durch eine lineare Bewegung in Einschubrichtung E (im Fall der Figuren senkrecht nach unten) das Kopfelement 304 aus seiner in den Figuren 9 und 10 gezeigten Vormontageposition in die in den Figuren 11 und 12 dargestellte Endmontageposition überführt.

In diesem Fall ist ein erster Abschnitt des Codes 114 in Form eines Codegrundelements 322 auf dem Eindrückabschnitt 318 des Kopfelements 304 angeordnet. Rechts und links des Eindrückabschnitts 318 sind je ein Freigabeelement 312 in Form einer Platte mittels eines Filmscharniers wie in der ersten Ausführungsform mit dem Eindrückabschnitt 318 verbunden. Jedes der beiden Freigabeelemente 312 trägt einen weiteren Abschnitt des Codes 114.

In der ersten Stellung der Freigabeelemente 312 hängen diese in einem spitzen Winkel zur Einschubrichtung E herunter, sodass der Code von dem (nicht dargestellten) Lesegerät 116 nicht abgelesen werden kann. Das Bild, das sich dem Lesegerät 116 in der vorbestimmten Leseposition bietet, zeigt Figur 10.

Erst wenn nach Eindrücken in Einschubrichtung E das Kopfelement 304 seine Endmontageposition eingenommen hat, wobei die beiden Freigabeelemente 312 durch Kontakt mit Abschnitten des Halteteils 302 relativ zum Eindrückabschnitt 318 verschwenkt wurden, liegen der Eindrückabschnitt 318 und die beiden Freigabeelemente 312 in einer Ebene. Der Code 114 kann vom Lesegerät 116 abgelesen werden.

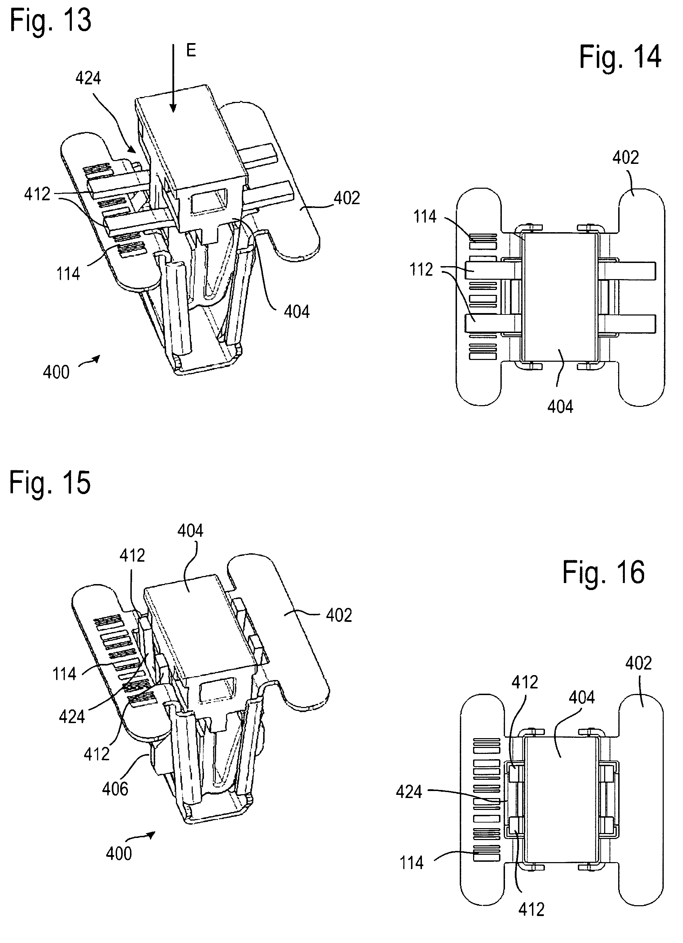

In der in den Figuren 13 bis 16 dargestellten vierten Ausführungsform ist ein Befestigungsclip 400 gezeigt, dessen Grundform im Wesentlichen der des Befestigungsclips 300 der dritten Ausführungsform entspricht.

In diesem Fall ist, wie in der zweiten Ausführungsform, der gesamte Code 114 auf einem ebenen Abschnitt des Halteteils 402 angebracht.

Zwei Freigabeelemente 412 in Form von schmalen Stegen sind über Filmscharniere mit dem Kopfelement 404 gekoppelt und liegen in der ersten Stellung (Figuren 13 und 14) so auf dem Halteteil 402 auf, dass sie Abschnitte des Codes 114 verdecken. Ein Ableseversuch aus der vorbestimmten Leseposition ergibt somit eine Fehlermeldung, da nicht der gesamte Code 114 sichtbar ist.

Beim Einschieben des Kopfelements 404 in Einschubrichtung E aus der Vormontageposition in die Endmontageposition werden die Freigabeelemente 412 in einen Zwischenraum 424 zwischen dem Halteteil 402 und dem Kopfelement 404 gezogen und somit vom Code 114 entfernt. Der Code 114 liegt somit vollständig frei und kann abgelesen werden und der Befestigungsclip 400 kann als korrekt montiert dokumentiert werden.

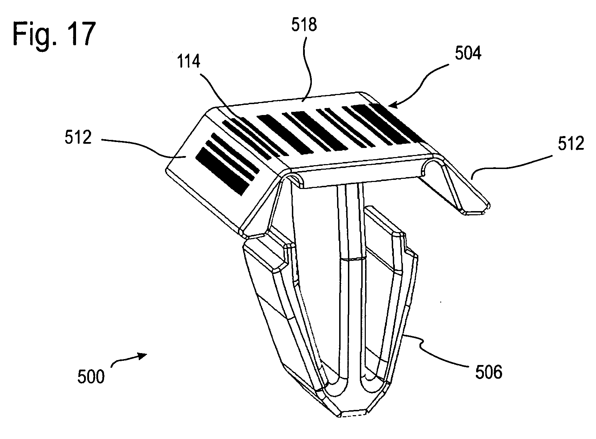

In Figur 17 ist eine nicht erfindungsgemäße Ausführungsform eines Befestigungsclips 500 dargestellt. In diesem Fall ist der Befestigungsclip 500 einstückig ausgebildet, so dass das Kopfelement 504 in den Rastabschnitt 506 übergeht. Kopfelement 504 und Rastabschnitt 506 sind nicht gegeneinander beweglich.

Wie bei der dritten Ausführungsform ist an zwei gegenüberliegenden Seiten eines Eindrückabschnitts 518 des Kopfelements 504 jeweils ein Freigabeelement 512 angelenkt. Sowohl der Eindrückabschnitt 518 als auch beide Freigabeelemente 512 tragen jeweils einen Codeabschnitt.

Wird der Befestigungsclip 500 bis in seine Endmontageposition in die Öffnung eingeschoben, werden die Codeabschnitte auf den Freigabeelementen 512 durch den Kontakt mit der Fahrzeugkarosserie oder einem anderen fahrzeugfesten Bauteil in eine Ebene mit dem Codeabschnitt des Eindrückabschnitts 518 gebracht. In diesem Zustand kann der Code 114 vom Lesegerät 116 abgelesen werden, wenn das Lesegerät 116 den Code 114 erfasst.

Die anderen für einen zweiteiligen Befestigungsclip beschriebenen Ausführungsformen lassen sich selbstverständlich auch auf einen einstückigen Befestigungsclip übertragen, was jedoch nicht erfindungsgemäß ist.

Natürlich sind auch viele verschiedene weitere Varianten zur Umsetzung des Prinzips denkbar, einen maschinenlesbaren Code an einem Befestigungsclip so anzubringen, dass bei der Bewegung eines Freigabeteils aus einer ersten in eine zweite Stellung der Code für ein Lesegerät freigegeben wird. Beispielsweise kann ein Kopfelement verwendet werden, dass durch Drehung um seine Achse aus der Vormontageposition in die Endmontageposition gebracht wird. Der Code kann dabei in zwei Teile aufgeteilt werden, die durch Drehen des Kopfelements zu einem lesbaren Gesamtcode zusammengeführt werden.

## Patentansprüche

1. Verfahren zum Montieren eines Bauteils mittels eines Befestigungsclips (100 - 500), wobei der Befestigungsclip (100-500) einen Rastabschnitt (106; 306; 406; 506) und ein Kopfelement (104 - 504) aufweist und das Kopfelement (104 - 504) und der Rastabschnitt (106; 306; 406; 506) in einer Einschubrichtung (E) gegeneinander beweglich sind, wobei das Kopfelement (104 - 504) zur Montage des Bauteils aus einer Vormontageposition in eine Endmontageposition gebracht wird,
**dadurch gekennzeichnet, dass** ein Freigabeelement (112 - 512) vorgesehen ist, das durch eine Bewegung des Kopfelements (104 - 504) relativ zum Rastabschnitt (106; 306; 406; 506) in Einschubrichtung (E) aus einer ersten Stellung in eine zweite Stellung gebracht wird, wenn das Kopfelement (104 - 504) in die Endmontageposition gebracht wird, und am Befestigungsclip (100 - 500) ein maschinenlesbarer Code (114) angebracht ist, der ein Barcode ist und der eine vollständige Abfolge von codierenden Zeichen umfasst, die den gesamten Sinngehalt der codierten Information enthält, wobei der Code von einem Lesegerät (116) aus einer vorbestimmten Leseposition, die bezüglich des Befestigungsclips (100 - 500) fest vorgegeben ist, in einer Ableserichtung parallel zur Einschubrichtung (E) in der ersten Stellung des Freigabeelements (112 - 512) nicht korrekt erkannt werden kann und der Code (114) nur in der zweiten Stellung des Freigabeelements (112 - 512) korrekt erkennbar ist.

2. Verfahren nach Anspruch 1, **dadurch gekennzeichnet, dass** dokumentiert wird, ob der Code (114) gelesen werden konnte.

3. Verfahren nach einem der vorhergehenden Ansprüche, **dadurch gekennzeichnet, dass** eine Warnung ausgegeben wird, wenn der Code (114) nicht gelesen werden konnte.

4. Befestigungsclip zur Verwendung in einem Verfahren nach einem der vorhergehenden Ansprüche, mit einem Rastabschnitt (106; 306; 406; 506) und einem Kopfelement (104 - 504), das aus einer Vormontageposition in eine Endmontageposition gebracht werden kann, wobei das Kopfelement (104 - 504) und der Rastabschnitt (106; 306; 406; 506) in einer Einschubrichtung (E) gegeneinander beweglich sind,
**dadurch gekennzeichnet, dass** ein maschinenlesbarer Code (114) vorgesehen ist, der ein Barcode ist, und der eine vollständige Abfolge von codierenden Zeichen umfasst, die den gesamten Sinngehalt der codierten Information enthält,
wobei ein Freigabeelement (112; 212; 312; 412; 512) vorgesehen ist, das mit dem Kopfelement (104 - 504) so gekoppelt ist, dass es bei einer Bewegung des Kopfelements (104 - 504) relativ zum Rastabschnitt (106; 306; 406; 506) in Einschubrichtung (E) in die Endmontageposition von einer ersten in eine zweite Stellung bewegt wird,
wobei sich das Freigabeelement (112-512) in der Vormontageposition in der ersten Stellung befindet, wobei der Code (114) durch ein Lesegerät (116) aus einer vorbestimmten Leseposition, die bezüglich des Befestigungsclips (100 - 500) fest vorgegeben ist, in einer Ableserichtung parallel zur Einschubrichtung (E) in der ersten Stellung nicht korrekt erkennbar ist und
sich das Freigabeelement (112-512) in der Endmontageposition in der zweiten Stellung befindet, und der Code (114) durch das Lesegerät (116) aus der vorbestimmten Leseposition in der Ableserichtung nur in der zweiten Stellung des Freigabeelements (112-512) korrekt erkennbar ist.

5. Befestigungsclip nach Anspruch 4, **dadurch gekennzeichnet, dass** der Code (114) aufgedruckt, aufgeklebt oder eingeprägt ist.

6. Befestigungsclip nach einem der Ansprüche 4 und 5, **dadurch gekennzeichnet, dass** zumindest ein Abschnitt des Codes (114) auf dem Freigabeelement (112; 312) angebracht ist.

7. Befestigungsclip nach einem der Ansprüche 4 bis 6, **dadurch gekennzeichnet, dass** das Freigabeelement (112; 212; 312; 412; 512) eine Platte ist, die beweglich mit dem Kopfelement (104; 204; 304; 404; 504) verbunden ist.

8. Befestigungsclip nach einem der Ansprüche 4 bis 7, **dadurch gekennzeichnet, dass** ein Codegrundelement (322), auf dem wenigstens ein Abschnitt des Codes (114) angebracht ist, vorgesehen ist, wobei bei der Bewegung des Kopfelements (304) gegenüber dem Rastabschnitt (306) das Freigabeelement (312) relativ zum Codegrundelement (322) bewegt wird.

9. Befestigungsclip nach Anspruch 8, **dadurch gekennzeichnet, dass** sich das Freigabeelement (312) in der ersten Stellung in einem Winkel zum Codegrundelement (322) erstreckt.

10. Befestigungsclip nach einem der Ansprüche 4 bis 9, **dadurch gekennzeichnet, dass** sich das Freigabeelement (112; 212; 312; 512) in der ersten Stellung in einem spitzen Winkel zu einer Längsachse des Kopfelements (104; 204; 304; 504) erstreckt.

11. Befestigungsclip nach einem der Ansprüche 4 bis 10, **dadurch gekennzeichnet, dass** zwei Freigabeelemente (312; 412; 512) vorgesehen sind.

12. Befestigungsclip nach einem der Ansprüche 4 bis 11, **dadurch gekennzeichnet, dass** das Freigabeelement (212; 412) eine Maskierungsplatte ist, die in der ersten Stellung einen Teil des Codes (114) abdeckt.

13. Befestigungsclip nach Anspruch 12, **dadurch gekennzeichnet, dass** die Maskierungsplatte ein Fenster (220) aufweist.

14. Befestigungsclip nach Anspruch 12, **dadurch gekennzeichnet, dass** die Maskierungsplatte so mit dem Kopfelement (404) gekoppelt ist, dass sie in der zweiten Stellung vom Code (114) entfernt ist.

## Claims

1. A method of assembling a component by means of a fastening clip (100 - 500), the fastening clip (100 - 500) including a latching portion (106; 306; 406; 506) and a head element (104 - 504), and the head element (104 - 504) and the latching portion (106; 306; 406; 506) being movable relative to each other in a direction of insertion (E), the head element (104 - 504) being transferred from a preliminary mounting position to a final mounting position for assembly of the component,
**characterized in that** an enabling element (112 - 512) is provided which is transferred from a first position to a second position by a movement of the head element (104 - 504) relative to the latching portion (106; 306; 406; 506) in the direction of insertion (E) when the head element (104 - 504) is transferred to the final mounting position, and the fastening clip (100 - 500) has a machine-readable code (114) applied thereto which is a bar code and which comprises a complete sequence of coding symbols which contains the entire meaning of the coded information, wherein in the first position of the enabling element (112 - 512), the code can not be correctly identified by a reader (116) from a predetermined reading position, which is fixed with respect to the fastening clip (100 - 500), in a reading direction parallel to the direction of insertion (E), and the code (114) is correctly identifiable only in the second position of the enabling element (112 - 512).

2. The method according to claim 1, **characterized in that** a documentation is made whether the code (114) could be read.

3. The method according to any of the preceding claims, **characterized in that** a warning is issued if it was not possible to read the code (114).

4. A fastening clip for use in a method according to any of the preceding claims, comprising a latching portion (106; 306; 406; 506) and a head element (104 - 504) which can be transferred from a preliminary mounting position to a final mounting position, the head element (104 - 504) and the latching portion (106; 306; 406; 506) being movable relative to each other in a direction of insertion (E),
**characterized in that** a machine-readable code (114) is provided which is a bar code and which comprises a complete sequence of coding symbols which contains the entire meaning of the coded information,
an enabling element (112; 212; 312; 412; 512) being provided which is coupled to the head element (104 - 504) such that it is moved from a first to a second position upon a movement of the head element (104 - 504) relative to the latching portion (106; 306; 406; 506) to the final mounting position in the direction of insertion (E),
the enabling element (112 - 512) being in the first position in the preliminary mounting position, wherein in the first position the code (114) is not correctly identifiable by a reader (116) from a predetermined reading position, which is fixed with respect to the fastening clip (100 - 500), in a reading direction parallel to the direction of insertion (E), and
the enabling element (112 - 512) being in the second position in the final mounting position, and the code (114) being correctly identifiable by the reader (116) from the predetermined reading position in the reading direction only in the second position of the enabling element (112 - 512).

5. The fastening clip according to claim 4, **characterized in that** the code (114) is printed on, glued on or embossed.

6. The fastening clip according to either of claims 4 and 5, **characterized in that** at least a portion of the code (114) is applied on the enabling element (112; 312).

7. The fastening clip according to any of claims 4 to 6, **characterized in that** the enabling element (112; 212; 312; 412; 512) is a plate which is movably connected to the head element (104; 204; 304; 404; 504).

8. The fastening clip according to any of claims 4 to 7, **characterized in that** a code base element (322) is provided on which at least a portion of the code (114) is applied, the enabling element (312) being moved relative to the code base element (322) when the head element (304) is moved with respect to the latching portion (306).

9. The fastening clip according to claim 8, **characterized in that** in the first position, the enabling element (312) extends at an angle relative to the code base element (322).

10. The fastening clip according to any of claims 4 to 9, **characterized in that** in the first position, the enabling element (112; 212; 312; 512) extends at an acute angle relative to a longitudinal axis of the head element (104; 204; 304; 504).

11. The fastening clip according to any of claims 4 to 10, **characterized in that** two enabling elements (312; 412; 512) are provided.

12. The fastening clip according to any of claims 4 to 11, **characterized in that** the enabling element (212; 412) is a masking plate which in the first position covers part of the code (114).

13. The fastening clip according to claim 12, **characterized in that** the masking plate includes a window (220).

14. The fastening clip according to claim 12, **characterized in that** the masking plate is coupled to the head element (404) such that it is removed from the code (114) in the second position.

## Revendications

1. Procédé de montage d'un composant au moyen d'un clip de fixation (100-500), le clip de fixation (100-500) présentant un tronçon d'enclenchement (106 ; 306 ; 406 ; 506) et un élément de tête (104-504) et l'élément de tête (104-504) et le tronçon d'enclenchement (106 ; 306 ; 406 ; 506) étant mobiles l'un par rapport à l'autre dans un sens d'insertion (E), l'élément de tête (104-504) étant amené d'une position de pré-montage dans une position de montage finale pour le montage du composant,
**caractérisé en ce qu'**il est prévu un élément de libération (112-512) qui est amené d'une première position dans une deuxième position par un mouvement de l'élément de tête (104-504) par rapport au tronçon d'enclenchement (106; 306 ; 406 ; 506) dans le sens d'insertion (E) lorsque l'élément de tête (104-504) est amené dans la position de montage finale, et **en ce qu'**un code (114) lisible par machine est appliqué sur le clip de fixation (100-500), lequel est un code-barres et comprend une séquence complète de symboles codant qui contient l'entière signification de l'information codée, le code n'étant pas apte à être identifié correctement par un appareil de lecture (116) à partir d'une position de lecture prédéterminée fixe par rapport au clip de fixation (100-500) dans un sens de lecture parallèle au sens d'insertion (E) lorsque l'élément de libération (112-512) se trouve dans la première position, et le code (114) étant apte à être identifié correctement uniquement dans la deuxième position de l'élément de libération (112-512).

2. Procédé selon la revendication 1, **caractérisé en ce qu'**une documentation est effectuée si il a été possible de lire le code (114) ou non.

3. Procédé selon l'une des revendications précédentes, **caractérisé en ce qu'**un avertissement est sorti lorsque le code (114) n'a pas pu être lu.

4. Clip de fixation pour l'utilisation dans un procédé selon l'une des revendications précédentes, présentant un tronçon d'enclenchement (106 ; 306 ; 406 ; 506) et un élément de tête (104-504) qui est apte à être amené d'une position de pré-montage dans une position de montage finale, l'élément de tête (104-504) et le tronçon d'enclenchement (106 ; 306 ; 406 ; 506) étant mobiles l'un par rapport à l'autre dans un sens d'insertion (E),
**caractérisé en ce qu'**il est prévu un code (114) lisible par machine, lequel est un code-barres et comprend une séquence complète de symboles codant qui contient l'entière signification de l'information codée,
un élément de libération (112 ; 212 ; 312 ; 412 ; 512) étant prévu, lequel est couplé à l'élément de tête (104-504) de manière à être déplacé d'une première dans une deuxième position lors d'un mouvement de l'élément de tête (104-504) par rapport au tronçon d'enclenchement (106; 306; 406; 506) dans le sens d'insertion (E) vers la position de montage finale,
l'élément de libération (112-512) se trouvant dans la première position dans la position de pré-montage, et le code (114), dans la première position, n'étant pas apte à être identifié correctement par un appareil de lecture (116) à partir d'une position de lecture prédéterminée fixe par rapport au clip de fixation (100-500) dans un sens de lecture parallèle au sens d'insertion (E), et
l'élément de libération (112-512) se trouvant dans la deuxième position dans la position de montage finale, et le code (114) étant apte à être identifié correctement par l'appareil de lecture (116) à partir de la position de lecture prédéterminée dans le sens de lecture uniquement dans la deuxième position de l'élément de libération (112-512).

5. Clip de fixation selon la revendication 4, **caractérisé en ce que** le code (114) est imprimé, collé ou estampé.

6. Clip de fixation selon l'une des revendications 4 et 5, **caractérisé en ce qu'**au moins un tronçon du code (114) est appliqué sur l'élément de libération (112 ; 312).

7. Clip de fixation selon l'une des revendications 4 à 6, **caractérisé en ce que** l'élément de libération (112 ; 212 ; 312 ; 412 ; 512) est une plaque qui est reliée de manière mobile à l'élément de tête (104 ; 204 ; 304 ; 404 ; 504).

8. Clip de fixation selon l'une des revendications 4 à 7, **caractérisé en ce qu'**il est prévu un élément de code de base (322) sur lequel au moins un tronçon du code (114) est appliqué, l'élément de libération (312) étant déplacé par rapport à l'élément de code de base (322) lors du mouvement de l'élément de tête (304) par rapport au tronçon d'enclenchement (306).

9. Clip de fixation selon la revendication 8, **caractérisé en ce que** dans la première position, l'élément de libération (312) s'étend sous un angle par rapport à l'élément de code de base (322).

10. Clip de fixation selon l'une des revendications 4 à 9, **caractérisé en ce que** dans la première position, l'élément de libération (112; 212; 312; 512) s'étend sous un angle aigu par rapport à un axe longitudinal de l'élément de tête (104 ; 204 ; 304 ; 504).

11. Clip de fixation selon l'une des revendications 4 à 10, **caractérisé en ce qu'**il est prévu deux éléments de libération (312 ; 412 ; 512).

12. Clip de fixation selon l'une des revendications 4 à 11, **caractérisé en ce que** l'élément de libération (212 ; 412) est une plaque de masquage recouvrant une partie du code (114) dans la première position.

13. Clip de fixation selon la revendication 12, **caractérisé en ce que** la plaque de masquage présente une fenêtre (220).

14. Clip de fixation selon la revendication 12, **caractérisé en ce que** la plaque de masquage est couplée à l'élément de tête (404) de manière à être retirée du code (114) dans la deuxième position.
